# EUROPEAN PATENT APPLICATION

(11) **EP 4 851 768 A1**
(43) Date of publication of application: **09.12.2026**
(21) Application number: 25747803.2
(22) Date of filing: 24.01.2025
(51) Int. Cl.: G06F 3/0481, G06F 3/0488, G06F 3/04842

(54) **INTERFACE DISPLAY METHOD AND APPARATUS, ELECTRONIC DEVICE, AND READABLE STORAGE MEDIUM**

(30) Priority: 31.01.2024 CN 202410139059
(71) Applicant: Beijing Zitiao Network Technology Co., Ltd., Beijing 100190 (CN)
(72) Inventor: YU, Jiaxin, Beijing 100028 (CN); XU, Xin, Beijing 100028 (CN); QIU, Tian, Beijing 100028 (CN); MA, Junjie, Beijing 100028 (CN); YU, Yue, Beijing 100028 (CN)
(74) Representative: Isarpatent
(86) International application number: PCT/CN2025/074586
(87) International publication number: WO 2025/162235

(57) **Abstract**

Provided in the embodiments of the present disclosure are an interface display method and apparatus, an electronic device, and a readable storage medium. The interface display method comprises: displaying a comment display interface, the comment display interface comprising at least one piece of first comment information; receiving a first trigger operation on the comment display interface; and in response to the first trigger operation, displaying a comment summary interface, the comment summary interface comprising a target component, the target component comprising at least one piece of viewpoint information corresponding to the at least one piece of comment information, the at least one piece of viewpoint information being semantically corresponding to at least one set of second comment information, the at least one set of second comment information comprising at least one piece of first comment information, and the at least one set of second comment information comprising at least one piece of comment information.

## Description

The present application claims priority to Chinese Patent Application No. 202410139059.2, filed on January 31, 2024, which is incorporated herein by reference in its entirety as a part of the present application.

### TECHNICAL FIELD

Embodiments of the present disclosure relate to an interface display method, an apparatus, an electronic device, and a readable storage medium.

### BACKGROUND

With the development of technologies, more and more applications provide a user comment function, and users may comment on media content in the applications.

### SUMMARY

Embodiments of the present disclosure provide an interface display method, an apparatus, an electronic device, and a readable storage medium.

An embodiment of the present disclosure provides an interface display method, which includes: displaying a comment display interface, where the comment display interface includes at least one item of first comment information; receiving a first trigger operation on the comment display interface; and in response to the first trigger operation, displaying a comment summary interface, where the comment summary interface includes a target component, the target component includes at least one item of opinion information corresponding to at least one item of comment information, the at least one item of opinion information being semantically associated with at least one group of second comment information, the at least one group of second comment information is included in the at least one item of first comment information, and the at least one group of second comment information includes at least one item of comment information.

An embodiment of the present disclosure provides an interface display apparatus, which includes: a displaying module, configured to display a comment display interface, where the comment display interface includes at least one item of first comment information; a receiving module, configured to receive a first trigger operation on the comment display interface; and the displaying module is further configured to, in response to the first trigger operation, display a comment summary interface, where the comment summary interface includes a target component, the target component includes at least one item of opinion information corresponding to at least one item of comment information, the at least one item of opinion information being semantically associated with at least one group of second comment information, the at least one group of second comment information is included in the at least one item of first comment information, and the at least one group of second comment information includes at least one item of comment information.

An embodiment of the present disclosure provides an electronic device, which includes a processor, a memory, and a program or instructions stored on the memory and executable on the processor, where the program or instructions, when executed by the processor, implement the above-mentioned interface display method.

An embodiment of the present disclosure provides a readable storage medium, where a program or instructions are stored on the readable storage medium, and the program or instructions, when executed by a processor, implement the above-mentioned interface display method.

An embodiment of the present disclosure provides a chip, which includes a processor and a communication interface, where the communication interface is coupled with the processor, and the processor is configured to run a program or instructions to implement the above-mentioned interface display method.

An embodiment of the present disclosure provides a computer program product, which is stored in a storage medium, where the program product is executed by at least one processor to implement the above-mentioned interface display method.

### BRIEF DESCRIPTION OF DRAWINGS

Fig. 1 shows a schematic flowchart of an interface display method provided by an embodiment of the present disclosure;
Fig. 2 shows a schematic diagram of a comment display interface and a comment summary interface provided by some embodiments of the present disclosure;
Fig. 3 shows a schematic diagram of a comment summary interface and a target interface provided by some embodiments of the present disclosure;
Fig. 4 shows a schematic diagram of a target interface provided by some embodiments of the present disclosure;
Fig. 5 shows a first schematic diagram of a comment summary interface provided by some embodiments of the present disclosure;
Fig. 6 shows a second schematic diagram of a comment summary interface provided by some embodiments of the present disclosure;
Fig. 7 shows a third schematic diagram of a comment summary interface provided by some embodiments of the present disclosure;
Fig. 8 shows a fourth schematic diagram of a comment summary interface provided by some embodiments of the present disclosure;
Fig. 9 shows a structural block diagram of an interface display apparatus provided by some embodiments of the present disclosure;
Fig. 10 shows a structural block diagram of an electronic device provided by some embodiments of the present disclosure; and
Fig. 11 shows a schematic hardware structural diagram of an electronic device provided by some embodiments of the present disclosure.

### DETAILED DESCRIPTION

The technical solutions in the embodiments of the present disclosure will be clearly described below with reference to the drawings in the embodiments of the present disclosure. It is clear that the described embodiments are part of the embodiments of the present disclosure, but not all of the embodiments. All other embodiments obtained by those of ordinary skills in the art based on the embodiments of the present disclosure belong to the scope of protection of the present disclosure.

The terms "first" and "second" in the specification and claims of the present disclosure are used to distinguish between similar objects, but are not used to describe a specific order or sequence. It should be understood that the terms used in this way are interchangeable under appropriate circumstances, so that the embodiments of the present disclosure may be implemented in an order other than those illustrated or described herein. Moreover, the objects distinguished by "first", "second", etc. are usually one type, and the number of objects is not limited. For example, the first object may be one or more. In addition, "and/or" in the specification and claims means at least one of the connected objects, and the character "/" generally means that the associated objects before and after are in an "or" relationship.

It may be understood that before using the technical solutions disclosed in the embodiments of the present disclosure, users shall be informed of the type, range of use, use scenarios, etc. of personal information involved in the present disclosure and obtain the authorization of users in an appropriate manner in accordance with relevant laws and regulations.

For example, in response to receiving an active request from a user, prompt information is sent to the user to clearly prompt the user that the requested operation will require access to and use of the user's personal information. In this way, the user may independently choose, based on the prompt information, whether to provide personal information to software or hardware, such as an electronic device, an application, a server, or a storage medium, that performs the operations of the technical solutions of the present disclosure.

As an optional but non-limiting implementation, in response to receiving an active request from a user, the prompt information may be sent to the user in the form of, for example, a pop-up window, and the prompt information may be presented in the pop-up window in text. In addition, the pop-up window may also include a selection control for the user to choose whether to "agree" or "disagree" to provide personal information to the electronic device.

It may be understood that the above process of notifying and obtaining user authorization is only illustrative and does not limit the implementations of the present disclosure, and other methods that satisfy relevant laws and regulations may also be applied to the implementations of the present disclosure.

With the development of Internet communication technologies, more and more users choose to browse news information about hot events online through media applications. For example, there are many similar comments in a media application, and it takes users a lot of time to understand the main points of opinion in the comment area.

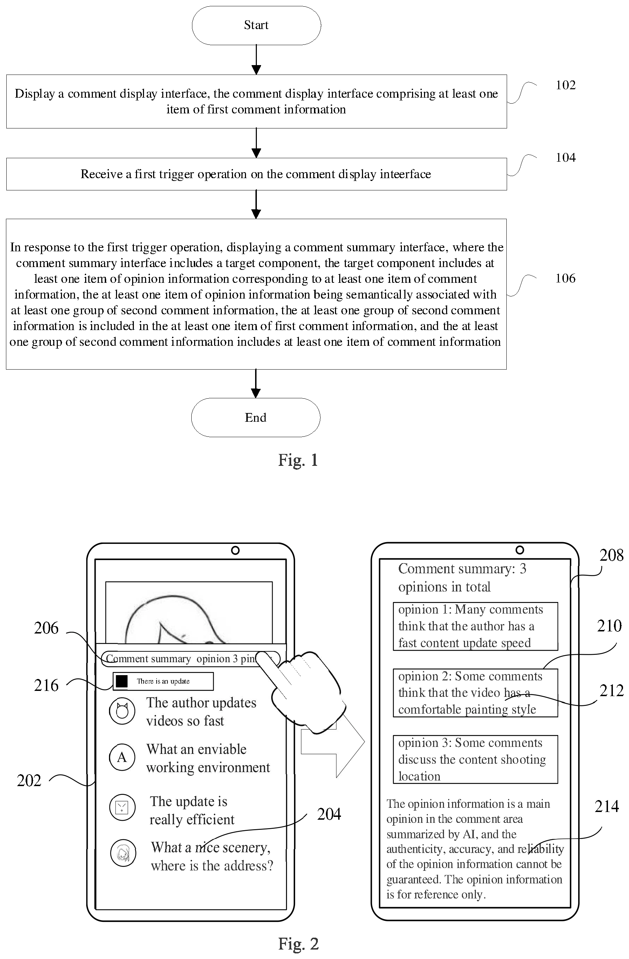

The interface display method, the interface display apparatus, the electronic device, and the readable storage medium provided by the embodiments of the present disclosure will be described in detail below with reference to FIGS. 1 to 11 through specific embodiments and application scenarios.

An embodiment of the present disclosure provides a method. Fig. 1 shows a schematic flowchart of an interface display method provided by an embodiment of the present disclosure. As shown in Fig. 1, the interface display method includes:
Step 102: displaying a comment display interface, where the comment display interface includes at least one item of first comment information.

In the embodiment of the present disclosure, the comment display interface is used for displaying comment information, and the comment display interface is used for displaying the first comment information.

Exemplarily, in response to a trigger operation performed on a media display interface, the comment display interface is displayed, and the first comment information related to media content displayed in the media display interface is displayed in the comment display interface, where the number of items of comment information is at least one.

Step 104: receiving a first trigger operation on the comment display interface.

Step 106: in response to the first trigger operation, displaying a comment summary interface, where the comment summary interface includes a target component, the target component includes at least one item of opinion information corresponding to at least one item of comment information, the at least one item of opinion information being semantically associated with at least one group of second comment information, the at least one group of second comment information is included in the at least one item of first comment information, and the at least one group of second comment information includes at least one item of comment information.

In the embodiment of the present disclosure, the first trigger operation is configured to trigger a jump from displaying the comment display interface to displaying the comment summary interface, and the comment summary interface is used for displaying the opinion information corresponding to the comment information. Specifically, the target component is displayed in the comment summary interface, and the opinion information corresponding to the first comment information is displayed in the target component. The opinion information is information related to a comment opinion extracted from the first comment information in the comment display interface. Each item of opinion information corresponds to one group of second comment information, and the second comment information is comment information in the first comment information. That is, each group of second comment information includes at least one item of first comment information, and the corresponding opinion information and the second comment information are consistent in semantics.

Exemplarily, the opinion information is obtained by performing target processing on at least one item of first comment information, and the opinion information corresponds to semantics of the at least one item of first comment information, and first comment information corresponding to the semantics of the opinion information is determined as second comment information.

In some implementations, in a case where a total number of items of first comment information is greater than or equal to a comment number threshold, the comment summary interface may be triggered to be displayed through the first trigger operation, and in a case where the total number of items of first comment information is less than the comment number threshold, the comment summary interface cannot be triggered to be displayed through the first trigger operation.

It should be noted that a total number of items of second comment information corresponding to all items of opinion information is less than or equal to the total number of items of first comment information, and each item of opinion information corresponds to at least one item of second comment information.

Exemplarily, the number of items of first comment information is 850, and it is determined, through the target processing, that there are two items of opinion information in the first comment information. The two items of opinion information correspond to two groups of second comment information, where a number of items of one group of second comment information is 98, and a number of items of another group of second comment information is 234.

Fig. 2 shows a schematic diagram of a comment display interface and a comment summary interface provided by some embodiments of the present disclosure. As shown in Fig. 2, a plurality of items of first comment information 204 and a "comment summary" button 206 are displayed in the comment display interface 202. After a user clicks on the "comment summary" button 206, a page jumps to display the comment summary interface 208. A target component 210 is displayed in the comment summary interface 208, and three items of opinion information 212 are displayed in the three target components 210, respectively. The operation that the user clicks on the "comment summary" button 206 is the first trigger operation.

In the embodiment of the present disclosure, in a case where at least one item of first comment information is displayed in the comment display interface, in response to the first trigger operation of the user on the comment display interface, the comment summary interface may be triggered to be displayed, and the opinion information generated based on the first comment information may be displayed in the target component in the comment summary interface. The user may quickly and conveniently understand a summary of opinion content included in the first comment information by viewing the opinion information, thereby improving the convenience for the user to understand the opinion content in the first comment information.

In some embodiments of the present disclosure, the interface display method further includes: displaying at least one first control in the target component, where the at least one first control corresponds to the at least one item of opinion information; receiving a second trigger operation on a target first control, where the target first control corresponds to target opinion information; and in response to the second trigger operation, displaying a target interface, where a group of second comment information is displayed in the target interface, and the group of second comment information corresponds to the target opinion information.

In the embodiment of the present disclosure, the first controls are in one-to-one correspondence with the opinion information displayed in the target component, and the first control is configured to trigger the display of the target interface corresponding to the opinion information, and a group of second comment information corresponding to the opinion information is displayed in the target interface. It should be noted that the number of items of opinion information displayed in the target interface is matched with the number of first controls, and the display position of the first control corresponds to the opinion information, which is convenient for the user to understand the correspondence between the first control and the opinion information.

Specifically, a plurality of items of opinion information and a plurality of first controls corresponding to the plurality of items of opinion information are displayed in the comment summary interface. When the user desires to browse a group of second comment information corresponding to a certain item of opinion information, the second trigger operation is performed on the corresponding first control to display the target interface corresponding to the opinion information, and the second comment information corresponding to the opinion information is displayed in the target interface.

Exemplarily, the target interface may be a comment management interface, and a user who releases the media content corresponding to the first comment information may view the second comment information corresponding to a certain item of opinion information in the comment management interface, and perform management operations such as deleting, hiding, and pinning on the second comment information.

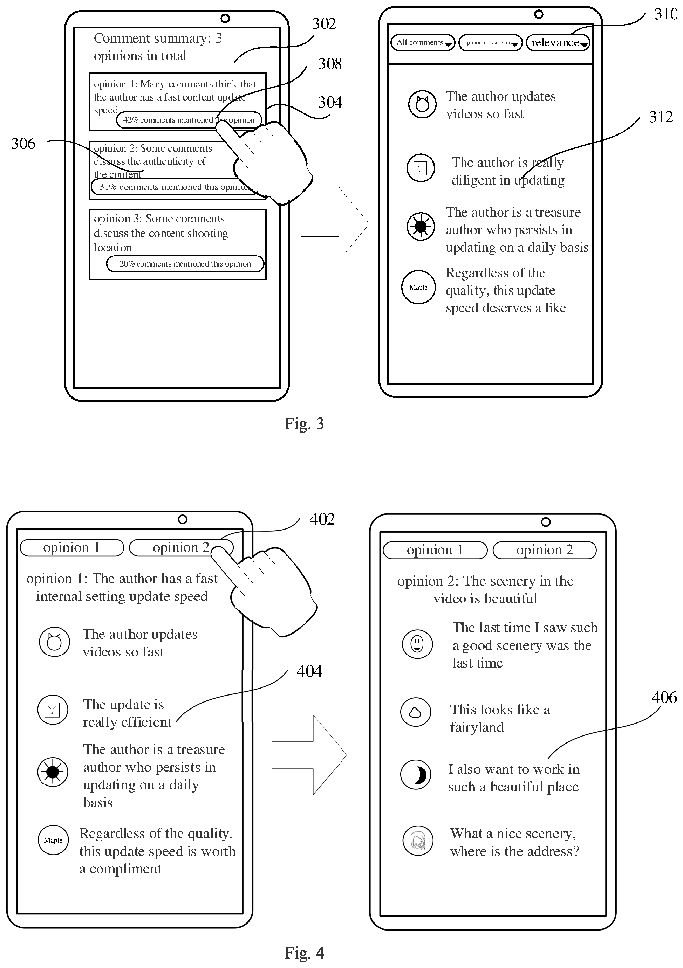

Fig. 3 shows a schematic diagram of a comment summary interface and a target interface provided by some embodiments of the present disclosure. As shown in Fig. 3, target components 304 are displayed in the comment summary interface 302, and opinion information 306 and corresponding first controls 308 are displayed in the three target components 304, respectively. After the user clicks on one of the first controls 308, a page jumps to display the target interface 310, and a plurality of items of second comment information 312 related to the opinion information 306 are displayed in the target interface 310.

In the embodiment of the present disclosure, the first control corresponding to the opinion information is displayed in the target component in the comment summary interface, and the user may perform the second trigger operation on the first control to trigger the display of the target interface of corresponding second comment information, so that the user may browse a group of second comment information corresponding to the opinion information in the target interface, which is convenient for the user to browse and view the second comment information corresponding to different items of opinion information separately.

In some embodiments of the present disclosure, the interface display method further includes: displaying first prompt information in the first control, where the first prompt information is configured to prompt a comment number of the group of second comment information, and/or a quantitative relationship between the group of second comment information and the at least one item of first comment information.

In the embodiment of the present disclosure, the first prompt information is displayed in the first control, and the first prompt information may be configured to prompt the comment number of the group of second comment information, and/or to prompt the quantitative relationship between the group of second comment information and the first comment information. Since the first control corresponds to the opinion information, the comment number of the group of second comment information is a comment number corresponding to the opinion information, and/or the group of second comment information accounts for a proportion of all first comment information.

Exemplarily, a total number of items of first comment information is 210, and when a comment number of a group of second comment information corresponding to the opinion information is 42, the first prompt information may include "42 comments mention this opinion", and the first prompt information may also include "20% of comments mention this opinion".

As shown in Fig. 3, the first prompt information is displayed in each of the three first controls 308 corresponding to the three items of opinion information 306, and the three items of first prompt information are "42% of comments mention this opinion", "31% of comments mention this opinion", and "20% of comments mention this opinion", respectively.

In the embodiment of the present disclosure, the first prompt information is displayed in the first control, so that the user may understand the number of a group of second comment information corresponding to the first control and/or the quantitative relationship between the group of second comment information and the first comment information, which is convenient for the user to know the number data of the second comment information corresponding to each item of opinion information in time.

In some embodiments of the present disclosure, the interface display method further includes: displaying at least two category labels in the target interface and/or the comment summary interface; and

in response to a trigger operation on a target category label, displaying at least one of: first comment information, second comment information, or opinion information corresponding to a target category, or opinion information corresponding to the target category.

In the embodiment of the present disclosure, at least two category labels are displayed in the target interface and/or the comment summary interface, the trigger operation on the target category label in the at least two category labels is received, and the first comment information, the second comment information, or the opinion information corresponding to the target category is displayed in response to the trigger operation.

The category labels correspond to different comment categories or content classifications, and by triggering the target category label, the first comment information, the second comment information, or the opinion information corresponding to the target category label may be filtered and displayed. In this way, the user may conveniently switch to display the information corresponding to the target category that needs to be viewed in the target interface, without the need for the user to frequently switch display interfaces, which simplifies the operation steps for the user to switch the information that needs to be viewed.

As shown in Fig. 3, exemplarily, the category labels displayed in the comment summary interface include content classification labels, for example, "all comments", and all second comment information may be triggered to be displayed through this label. For another example, the category labels include "opinion classification", and the second comment information may be triggered to be displayed according to opinion information classification through this label. For another example, the category labels include "relevance", and various sorting options may be triggered to be displayed through this label, including sorting by release time, sorting by a number of likes, etc., and the user may adjust a sorting manner of the second comment information by selecting a target sorting option.

Exemplarily, the category labels corresponding to the first comment information include time-type labels, for example, "in the last day", and first comment information whose comment time is within one day may be filtered through this label. The category labels corresponding to the first comment information include content-type labels, for example, "with pictures", and first comment information including picture content may be filtered through this label. For another example, the category labels include "related to opinion 2", and first comment information related to the opinion information of "opinion 2", that is, a group of second comment information corresponding to the opinion information of "opinion 2", may be filtered through this label.

Fig. 4 shows a schematic diagram of a target interface provided by some embodiments of the present disclosure. As shown in Fig. 4, two category labels 402, "opinion 1" and "opinion 2", are displayed in the target interface. When a group of second comment information 404 related to "opinion 1" is displayed in the target interface, the user clicks on the target category label "opinion 2", and a group of second comment information 406 related to the opinion information of "opinion 2" is displayed in the target interface.

The category labels correspond to different opinion categories or content classifications, and by triggering the target category label, the opinion information corresponding to the target category label may be filtered and displayed. In this way, the user may conveniently filter the opinion information that needs to be viewed in the comment summary interface, and when a large amount of opinion information is displayed in the comment summary interface, the time required for the user to search for the corresponding opinion information is reduced.

Exemplarily, the category labels corresponding to the opinion information include a category determined based on semantics of a plurality of items of opinion information, such as "related to work content", "related to work quality", and "related to author interaction", and opinion information matching with the category labels may be filtered in the comment summary interface through such labels.

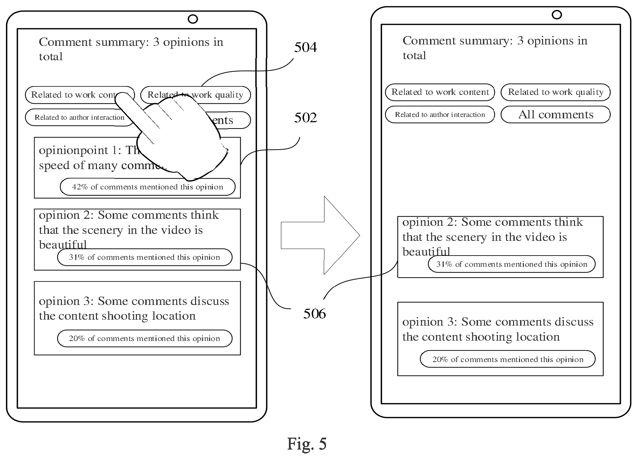

Fig. 5 shows a first schematic diagram of a comment summary interface provided by some embodiments of the present disclosure. As shown in Fig. 5, a target component 502 and two category labels 504 are displayed in the comment summary interface, and a plurality of items of opinion information 506 are displayed in the target component 502. The user clicks on the target category label "related to work content", and one item of opinion information 506 related to "work content" is displayed in the target component 502.

In some embodiments of the present disclosure, receiving the first trigger operation on the comment display interface includes:
displaying a second control in the comment display interface, where the second control includes second prompt information, and the second prompt information is configured to prompt a number of opinion components in the comment summary interface; and
receiving the first trigger operation on the second control.

In the embodiment of the present disclosure, the second control is displayed in the comment display interface, and the second control may respond to the first trigger operation of the user to trigger the display of the comment summary interface. The second prompt information is displayed in the second control, and the second prompt information may prompt a number of opinion components displayed in the comment summary interface, with one item of opinion information being displayed in each opinion component.

As shown in Fig. 2, the second control is the "comment summary" button 206, "3 items of opinion information have been generated" is displayed in the second control, and the second control is displayed at the top of the comment display interface 202.

In the embodiment of the present disclosure, the second prompt information for prompting the number of opinion components is displayed in the second control, so that the user may know in time the number of opinion components and the number of items of opinion information displayed in the comment summary interface when viewing the comment display interface, which plays a prompting role for the user to opinion the comment summary interface.

In some embodiments of the present disclosure, the interface display method further includes: displaying at least partial information of at least one item of second comment information in the target component.

In the embodiment of the present disclosure, not only the opinion information but also at least one item of second comment information corresponding to the opinion information is displayed in the target component. When there is a large amount of content in the second comment information, partial information of the second comment information may be displayed in the target component, that is, part of the content in the second comment information is omitted, to reduce a display area occupied by the second comment information in the target component. For example, part of content of one item or more items of second comment information may be displayed in the target component.

It should be noted that a plurality of items of second comment information may also be displayed in the target component, and the plurality of items of second comment information may include complete second comment information or part of second comment information.

Exemplarily, when the complete second comment information is "The concept of this factory is really praiseworthy, and it is one of the few sober people in the world. Where is the specific location? Is it still hiring now?", only "The concept of this factory is really praiseworthy,..." may be displayed in the target component.

In the embodiment of the present disclosure, the second comment information is displayed in the target component, so that the user may view the opinion information and the corresponding comment information in the comment summary interface, and only part of information in the second comment information may be displayed, to reduce the display area occupied by the second comment information in the target component, so that the target component may display more content.

In some embodiments of the present disclosure, the interface display method further includes:
displaying at least part of the second comment information in the target component in a folding way, and displaying a fourth control;
receiving a third trigger operation on the fourth control;
in response to the third trigger operation, unfolding the at least part of the second comment information, and displaying a fifth control;
receiving a fourth trigger operation on the fifth control; and
in response to the fourth trigger operation, displaying at least part of the second comment information in the folding way, and displaying the fourth control.

In the embodiment of the present disclosure, at least part of the second comment information is displayed in the target component in the folded manner, and the fourth control is configured to respond to the third trigger operation to unfold the at least part of the second comment information that is folded and displayed. After the at least part of the second comment information that is folded is unfolded and displayed, the fourth control is hidden in the target component and the fifth control is displayed. The fifth control is configured to respond to the fourth trigger operation to display the at least part of the second comment information again in the folding way, hide the fifth control, and restore the display of the fourth control. In this way, the user may switch the at least part of the second comment between the folded display state and the unfolded display state through the trigger operations on the fourth control and the fifth control.

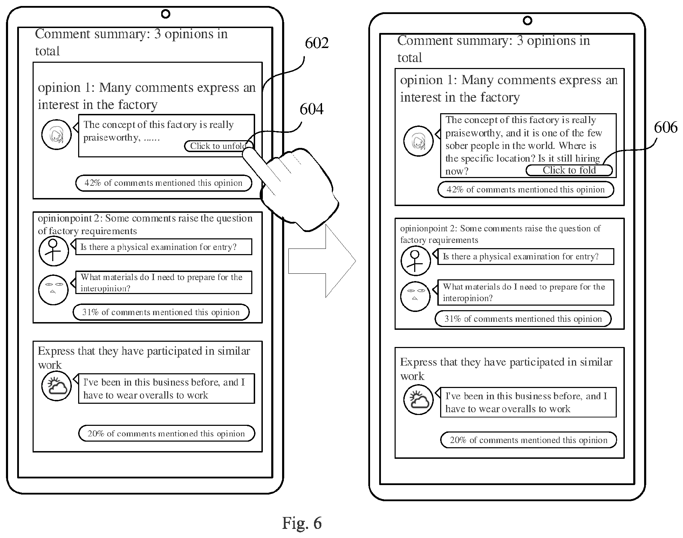

Fig. 6 shows a second schematic diagram of a comment summary interface provided by some embodiments of the present disclosure. As shown in Fig. 6, a target component 602 is displayed in the comment summary interface, and at least part of second comment information "The concept of this factory is really praiseworthy,..." and a fourth control 604 are displayed in the target component 602, and "Click to unfold" is displayed in the fourth control 604. After the user clicks on the fourth control 604, the second comment information "The concept of this factory is really praiseworthy, and it is one of the few sober people in the world. Where is the specific location? Is it still hiring now?" and a fifth control 606 are unfolded, and "Click to fold" is displayed in the fifth control 606.

In the embodiment of the present disclosure, at least part of the second comment information may be folded and displayed in the target component, and the fourth control for unfolding the second comment information is displayed. The user may unfold the second comment information that is folded and displayed by triggering the fourth control. After the second comment information that is folded is unfolded and displayed, the fifth control is also displayed in the target component, and the user may display the second comment information by triggering the fifth control in the folding way. In this way, the user may control whether the second comment information is folded and displayed through the fourth control and the fifth control, thereby improving the convenience for the user to view the second comment information in the comment summary interface.

In some embodiments of the present disclosure, in a case where a text number of the second comment information in the target component is greater than a number threshold, a number of items of the second comment information in the target component is N, where N is a positive integer; and
in a case where the text number of the second comment information in the target component is less than or equal to the number threshold, the number of items of the second comment information in the target component is M, where M is a positive integer, and N < M.

In the embodiment of the present disclosure, a specific number of items of second comment information corresponding to the opinion information displayed in the target component is determined based on a numerical relationship between the text number of the second comment information corresponding to the opinion information displayed in the target component and the number threshold. It should be noted that the number threshold may be a character threshold, a line number threshold, etc., and a specific value range of the number threshold may be set according to actual requirements, which is not limited herein.

Specifically, when the text number of the second comment information corresponding to the opinion information in the target component is greater than the number threshold, it is determined that there are more characters in the second comment information corresponding to the opinion information, and at this time, fewer items of second comment information are displayed. When the text number of the second comment information corresponding to the opinion information is less than or equal to the number threshold, it is determined that the text number of the second comment information corresponding to the opinion information is small, and at this time, more items of second comment information are displayed.

As shown in Fig. 6, exemplarily, one of the target components includes opinion information of opinion 1, and another target component includes opinion information of opinion 2. There are more characters in the second comment information corresponding to the opinion information of opinion 1, so only one item of second comment information is displayed, while there are fewer characters in the second comment information corresponding to the opinion information of opinion 2, so two items of second comment information are displayed.

In the embodiment of the present disclosure, the number of items of second comment information displayed in the target component is selected based on the relationship between the text number of the second comment information in the target component and the number threshold, thereby realizing an adaptive adjustment of the number of items of second comment information in the target component according to the text number in the second comment information.

In some embodiments of the present disclosure, the opinion information includes opinion summary information and/or opinion detail information.

In the embodiment of the present disclosure, the opinion summary information includes information for summarizing the opinion extracted from the first comment information, and the opinion detail information includes detailed content of the opinion extracted from the first comment information, that is, the opinion summary information is a general description of the opinion detail information.

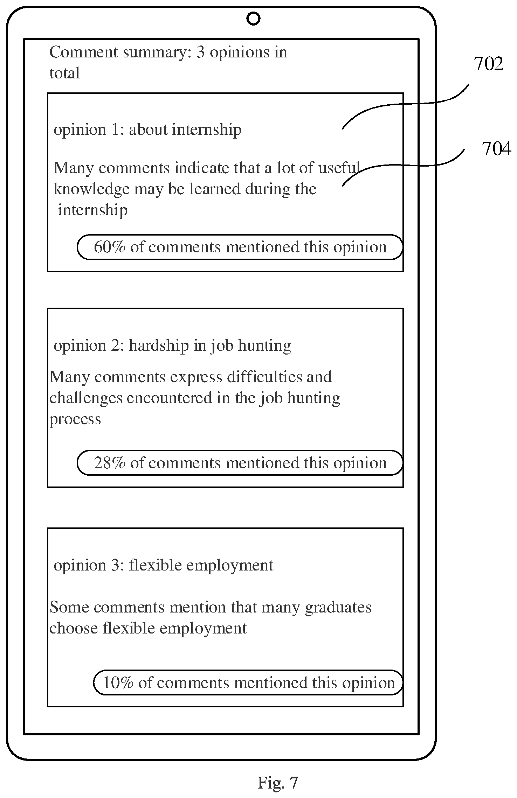

Fig. 7 shows a third schematic diagram of a comment summary interface provided by some embodiments of the present disclosure. As shown in Fig. 7, the opinion summary information 702 includes "opinion 1: about internship", "opinion 2: hardship in job hunting", and "opinion 3: flexible employment", and the corresponding opinion detail information 704 includes "many comments indicate that a lot of useful knowledge may be learned during the internship", "many comments express difficulties and challenges encountered in the job hunting process", and "some comments mention that many graduates choose flexible employment".

In the embodiment of the present disclosure, the opinion information includes the opinion summary information and/or the opinion detail information. By viewing the opinion summary information, the user may know the relevant general summary of each item of opinion information extracted from the first comment information, and by viewing the opinion detail information of each opinion, the user may fully understand the detailed content of each extracted opinion.

In some embodiments of the present disclosure, a number of the target components is at least two, and an arrangement order of the at least two target components is associated with a number of items of second comment information corresponding to the target components.

In the embodiment of the present disclosure, a plurality of target components are displayed in the comment summary interface, each target component corresponds to at least one item of opinion information, each item of opinion information corresponds to one group of second comment information, and the number of items of one group of second comment information is at least one, that is, each target component corresponds to at least one item of second comment information. Before the plurality of target components are displayed, the number of items of second comment information corresponding to each target component is determined, and the plurality of target components are sorted based on the number of items of second comment information corresponding to the plurality of target components, and the plurality of target components are displayed according to a display order obtained through sorting.

Exemplarily, a target component with a larger number of items of corresponding second comment information is set to be ranked higher in the display order, and a target component with a smaller number of items of corresponding second comment information is set to be ranked lower in the display order. As shown in Fig. 7, opinion information of "opinion 1", opinion information of "opinion 2", and opinion information of "opinion 3" are displayed in the three target components, respectively. The opinion information of "opinion 1" is mentioned in 60% of comments, the opinion information of "opinion 2" is mentioned in 28% of comments, and the opinion information of "opinion 3" is mentioned in 10% of comments, and sorting and displaying are performed according to an order of "opinion 1", "opinion 2", and "opinion 3".

In the embodiment of the present disclosure, in a case where there are a plurality of target components in the comment summary interface, the display order of the plurality of target components is sorted based on the number of items of second comment information corresponding to the opinion information in the plurality of target components, so that the user may clearly know the number of items of second comment information associated with different items of opinion information.

In some embodiments of the present disclosure, the interface display method further includes: in a case where a content update amount of the target component in the comment summary interface is greater than an update amount threshold, displaying a first identifier in the comment display interface.

In the embodiment of the present disclosure, with an increase in the first comment information, the opinion information may be updated based on new first comment information. At least one item of opinion information is displayed in the target component, and in a case where the opinion information is updated, the content update amount of the display content displayed in the target component is determined. When the content update amount is greater than the update amount threshold, the first identifier is displayed in the comment display interface, and the user is prompted by the first identifier that the comment summary interface includes a large amount of updated content, which plays a role of prompting the user to view the comment summary interface.

Exemplarily, the display content in the target component includes, but is not limited to, at least one of the following: opinion information, second comment information related to the opinion information, and the first control.

As shown in Fig. 2, exemplarily, the first identifier 216 is displayed at a position close to the "comment summary" button 206.

In the embodiment of the present disclosure, in response to the first trigger operation on the first identifier, the comment summary interface is displayed, and the target component with the content update amount greater than the update amount threshold is highlighted. That is, by performing the corresponding first trigger operation on the first identifier, it is also possible to trigger the jump to display the comment summary interface, and the target component with the content update amount greater than the update amount threshold is highlighted in the comment summary interface, so that the user may quickly locate and view the target component with a large amount of updated content in the comment summary interface.

Some embodiments of the present disclosure further include: displaying a sixth control in the comment summary interface; receiving a fifth trigger operation on the sixth control; and generating and outputting feedback information of the opinion information in response to the fifth trigger operation.

In the embodiment of the present disclosure, the sixth control is configured to trigger the generation and output of the feedback information, and the feedback information includes evaluation feedback for the opinion information in the comment summary interface. Based on the evaluation feedback information, models and algorithms related to the comment summary may be optimized, and a comment summary result may be dynamically adjusted.

Exemplarily, the feedback information includes, but is not limited to: satisfaction information corresponding to each item of opinion information.

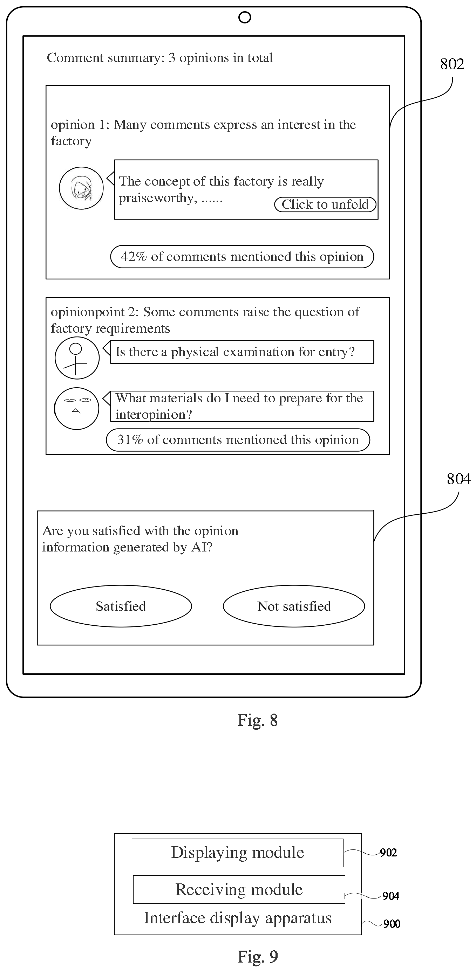

Fig. 8 shows a fourth schematic diagram of a comment summary interface provided by some embodiments of the present disclosure. As shown in Fig. 8, two target components 802 and a sixth control 804 are displayed in the comment summary interface, and one item of opinion information is displayed in each target component 802. The sixth control 804 includes a satisfaction button and a dissatisfaction button. When the user clicks on the satisfaction button, satisfaction evaluation information for the opinion information is fed back. After the user clicks on the dissatisfaction button, a control for feeding back reason information of dissatisfaction evaluation information is displayed.

In the embodiment of the present disclosure, the sixth control is displayed in the comment summary interface, so that the user may perform evaluation feedback on the opinion information in the comment summary interface, which is convenient for subsequent optimization of the comment summary interface and optimization of the target processing for extracting the opinion information.

In some embodiments of the present disclosure, the interface display method further includes: displaying third prompt information in the comment summary interface, where the third prompt information is configured to prompt the user of a generation manner of the opinion information.

In the embodiment of the present disclosure, the third prompt information is displayed in the comment summary interface to prompt the user of the generation manner of the opinion information in the comment summary interface, thereby improving the user experience on the comment summary interface.

Exemplarily, the third prompt information may be fixedly displayed at the top or bottom of the comment summary interface, and the third prompt information may also be displayed in the comment display interface in the form of a floating window.

As shown in Fig. 2, the third prompt information 214 is displayed at the bottom of the comment summary interface 208, and the third prompt information 214 may include "The opinion information is a main opinion in the comment area summarized by AI (Artificial Intelligence), and the authenticity, accuracy, and reliability of the opinion information cannot be guaranteed. The opinion information is for reference only".

In some embodiments of the present disclosure, the opinion information is generated based on target processing on the at least one item of first comment information, and the target processing includes at least one of: text model-based summarization, subgraph-based keyword extraction, graph coreference processing, and semantic coreference processing.

In the embodiment of the present disclosure, the opinion information associated with the at least one item of first comment information may be generated by performing the target processing on the at least one item of first comment information displayed in the display interface. The target processing performed on the at least one item of first comment information includes at least one of: text model-based summarization, subgraph-based keyword extraction, graph coreference processing, and semantic coreference processing.

Exemplarily, the first comment information is obtained periodically, and the opinion information is obtained by performing processing such as clustering service, aggregation and deduplication on the first comment information.

An execution body of the interface display method provided by the embodiment of the present disclosure may be an interface display apparatus. In the embodiments of the present disclosure, the interface display apparatus provided by the embodiments of the present disclosure is described by taking as an example that the interface display apparatus executes the interface display method.

Some embodiments of the present disclosure provide an interface display apparatus. Fig. 9 shows a structural block diagram of an interface display apparatus provided by some embodiments of the present disclosure. As shown in Fig. 9, the interface display apparatus 900 includes:
a displaying module 902, configured to display a comment display interface, where the comment display interface includes at least one item of first comment information;
a receiving module 904, configured to receive a first trigger operation on the comment display interface; and
the displaying module 902 is further configured to, in response to the first trigger operation, display a comment summary interface, where the comment summary interface includes a target component, the target component includes at least one item of opinion information corresponding to at least one item of comment information, the at least one item of opinion information being semantically associated with at least one group of second comment information, the at least one group of second comment information is included in the at least one item of first comment information, and the at least one group of second comment information includes at least one item of comment information.

In the embodiment of the present disclosure, in a case where at least one item of first comment information is displayed in the comment display interface, in response to the first trigger operation of the user on the comment display interface, the comment summary interface may be triggered to be displayed, and the opinion information generated based on the first comment information may be displayed in the target component in the comment summary interface. The user may quickly and conveniently understand a summary of opinion content included in the first comment information by viewing the opinion information, thereby improving the convenience for the user to understand the opinion content in the first comment information.

In some embodiments of the present disclosure, the displaying module 902 is configured to display at least one first control in the target component, where the at least one first control corresponds to the at least one item of opinion information;
the receiving module 904 is configured to receive a second trigger operation on a target first control, where the target first control corresponds to target opinion information; and
the displaying module 902 is configured to, in response to the second trigger operation, display a target interface, where a group of second comment information is displayed in the target interface, and the group of second comment information corresponds to the target opinion information.

In the embodiment of the present disclosure, the first control corresponding to the opinion information is displayed in the target component in the comment summary interface, and the user may perform the second trigger operation on the first control to trigger the display of the target interface of corresponding second comment information, so that the user may browse a group of second comment information corresponding to the opinion information in the target interface, which is convenient for the user to browse and view the second comment information corresponding to different items of opinion information separately.

In some embodiments of the present disclosure, the displaying module 902 is configured to display first prompt information in the first control, where the first prompt information is configured to prompt a comment number of the group of second comment information, and/or a quantitative relationship between the group of second comment information and the comment information.

In the embodiment of the present disclosure, the first prompt information is displayed in the first control, so that the user may know the number of the group of second comment information corresponding to the first control and/or the quantitative relationship between the group of second comment information and the first comment information, thereby facilitating the user to know the quantity data of the second comment information corresponding to each item of opinion information in time.

In some embodiments of the present disclosure, the displaying module 902 is configured to display at least two category labels in the target interface and/or the comment summary interface; and
the displaying module 902 is configured to, in response to a trigger operation on a target category label, display at least one of: first comment information corresponding to a target category, second comment information corresponding to the target category, and opinion information corresponding to the target category.

In the embodiment of the present disclosure, at least two category labels are displayed in the target interface and/or the comment summary interface, the trigger operation on the target category label in the at least two category labels is received, and the first comment information, the second comment information, or the opinion information corresponding to the target category is displayed in response to the trigger operation. The category labels correspond to different comment categories or content classifications, and by triggering the target category label, the first comment information, the second comment information, or the opinion information corresponding to the target category label may be filtered and displayed. In this way, the user may conveniently switch to display the information corresponding to the target category that needs to be viewed in the target interface, without the need for the user to frequently switch display interfaces, which simplifies the operation steps for the user to switch the information that needs to be viewed.

In some embodiments of the present disclosure, the displaying module 902 is configured to display a second control in the comment display interface, where the second control includes second prompt information, and the second prompt information is configured to prompt a number of opinion components in the comment summary interface; and
the receiving module 904 is configured to receive the first trigger operation on the second control.

In the embodiment of the present disclosure, the second prompt information for prompting the number of opinion components is displayed in the second control, so that the user may know in time the number of opinion components and the number of items of opinion information displayed in the comment summary interface when viewing the comment display interface, which plays a prompting role for the user to view the comment summary interface.

In some embodiments of the present disclosure, the displaying module 902 is configured to display at least partial information of at least one item of second comment information in the target component.

In the embodiment of the present disclosure, the second comment information is displayed in the target component, so that the user may view the opinion information and the corresponding comment information in the comment summary interface, and only part of information in the second comment information may be displayed, to reduce a display area occupied by the second comment information in the target component, so that the target component may display more content.

In some embodiments of the present disclosure, the displaying module 902 is configured to display at least part of the second comment information in the target component in a folding way, and display a fourth control;
the receiving module 904 is configured to receive a third trigger operation on the fourth control;
the displaying module 902 is configured to, in response to the third trigger operation, unfold the at least part of the second comment information, and display a fifth control;
the receiving module 904 is configured to receive a fourth trigger operation on the fifth control; and
the displaying module 902 is configured to, in response to the fourth trigger operation, display at least part of the second comment information in the folding way, and display the fourth control.

In the embodiment of the present disclosure, at least part of the second comment information may be folded and displayed in the target component, and the fourth control for unfolding the second comment information is displayed. The user may unfold the second comment information that is folded and displayed by triggering the fourth control. After the second comment information that is folded is unfolded and displayed, the fifth control is also displayed in the target component, and the user may display the second comment information by triggering the fifth control in the folding way. In this way, the user may control whether the second comment information is folded and displayed through the fourth control and the fifth control, thereby improving the convenience for the user to view the second comment information in the comment summary interface.

In some embodiments of the present disclosure, in a case where a text number of the second comment information in the target component is greater than a number threshold, a number of items of the second comment information in the target component is N, where N is a positive integer; and
in a case where the text number of the second comment information in the target component is less than or equal to the number threshold, the number of items of the second comment information in the target component is M, where M is a positive integer, and N < M.

In the embodiment of the present disclosure, the number of items of second comment information displayed in the target component is selected based on the relationship between the text number of the second comment information in the target component and the number threshold, thereby realizing an adaptive adjustment of the number of items of second comment information in the target component according to the text number in the second comment information.

In some embodiments of the present disclosure, the opinion information includes opinion summary information and/or opinion detail information.

In the embodiment of the present disclosure, the opinion information includes the opinion summary information and/or the opinion detail information. By viewing the opinion summary information, the user may know the relevant summary of all the opinion information extracted from the first comment information, and by viewing the opinion detail information of each opinion, the user may fully understand the detailed content of each extracted opinion.

In some embodiments of the present disclosure, a number of the target components is at least two, and an arrangement order of the at least two target components is associated with a number of items of second comment information corresponding to the target components.

In the embodiment of the present disclosure, in a case where there are a plurality of target components in the comment summary interface, the display order of the plurality of target components is sorted based on the number of items of second comment information corresponding to the opinion information in the plurality of target components, so that the user may clearly know the number of items of second comment information associated with different items of opinion information.

In some embodiments of the present disclosure, the displaying module 902 is configured to, in a case where a content update amount of the target component in the comment summary interface is greater than an update amount threshold, display a first identifier in the comment display interface.

In the embodiment of the present disclosure, with an increase in the first comment information, the opinion information may be updated based on new first comment information. At least one item of opinion information is displayed in the target component, and in a case where the opinion information is updated, the content update amount of the display content displayed in the target component is determined. When the content update amount is greater than the update amount threshold, the first identifier is displayed in the comment display interface, and the user is prompted by the first identifier that the comment summary interface includes a large amount of updated content, which plays a role of prompting the user to view the comment summary interface.

In some embodiments of the present disclosure, the displaying module 902 is configured to display a sixth control in the comment summary interface;
the receiving module 904 is configured to receive a fifth trigger operation on the sixth control; and
the interface display apparatus 900 further includes:
a generating module, configured to generate feedback information in response to the fifth trigger operation; and
an outputting module, configured to output the feedback information of the opinion information.

In the embodiment of the present disclosure, the sixth control is displayed in the comment summary interface, so that the user may perform evaluation feedback on the opinion information in the comment summary interface, which is convenient for subsequent optimization of the comment summary interface and optimization of the target processing for extracting the opinion information.

In some embodiments of the present disclosure, the displaying module 902 is configured to display third prompt information in the comment summary interface, where the third prompt information is configured to prompt the user of a generation manner of the opinion information.

In the embodiment of the present disclosure, the third prompt information is displayed in the comment summary interface to prompt the user of the generation manner of the opinion information in the comment summary interface, thereby improving the user experience on the comment summary interface.

In some embodiments of the present disclosure, the opinion information is generated based on target processing on the at least one item of first comment information, and the target processing includes at least one of: text model-based summarization, subgraph-based keyword extraction, graph coreference processing, and semantic coreference processing.

In the embodiment of the present disclosure, the opinion information associated with the at least one item of first comment information may be generated by performing the target processing on the at least one item of first comment information displayed in the display interface. The target processing performed on the at least one item of first comment information includes at least one of: text model-based summarization, subgraph-based keyword extraction, graph coreference processing, and semantic coreference processing.

The interface display apparatus in the embodiments of the present disclosure may be an electronic device, or a component in an electronic device, such as an integrated circuit or a chip. The electronic device may be a terminal or other device other than the terminal. Exemplarily, the electronic device may be a mobile phone, a tablet computer, a notebook computer, a palmtop computer, a vehicle-mounted electronic device, a mobile Internet device (MID), an augmented reality (AR)/virtual reality (VR) device, a robot, a wearable device, an ultra-mobile personal computer (UMPC), a netbook, or a personal digital assistant (PDA), and may also be a server, a network attached storage (NAS), a personal computer (PC), a television (TV), a teller machine, or a self-service machine, which is not specifically limited in the embodiments of the present disclosure.

The interface display apparatus in the embodiments of the present disclosure may be an apparatus having an operating system. The operating system may be an Android operating system, an iOS operating system, or other possible operating systems, which is not specifically limited in the embodiments of the present disclosure.

The interface display apparatus provided by the embodiments of the present disclosure may implement various processes implemented by the above method embodiments, and details are not repeated herein to avoid redundancy.

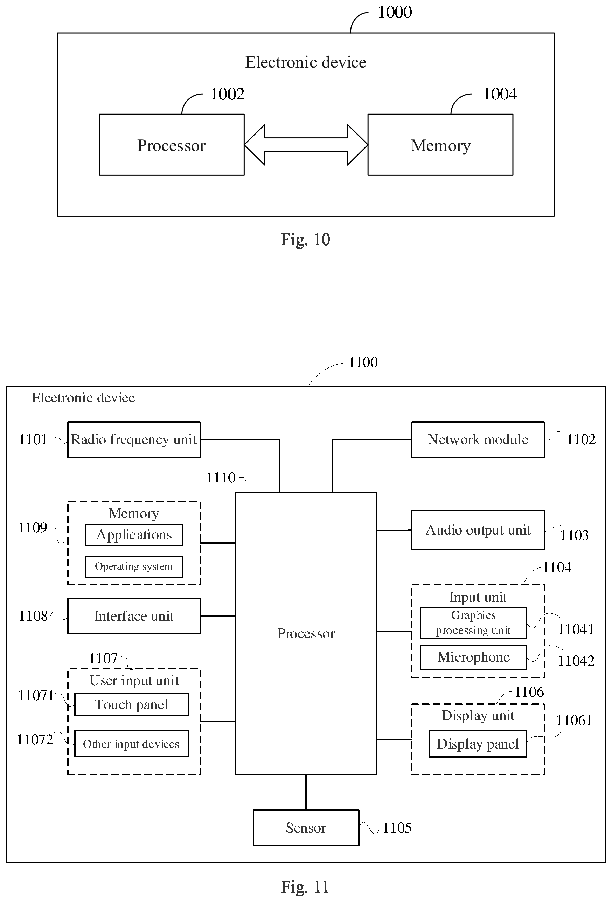

Optionally, an embodiment of the present disclosure further provides an electronic device. Fig. 10 shows a structural block diagram of an electronic device provided by some embodiments of the present disclosure. As shown in Fig. 10, the electronic device 1000 includes a processor 1002 and a memory 1004, and a program or instructions executable on the processor 1002 are stored on the memory 1004. The program or instructions, when executed by the processor 1002, implement various steps of the above method embodiments, and may achieve the same technical effects. To avoid redundancy, details are not repeated herein.

It should be noted that the electronic device in the embodiments of the present disclosure includes the above-mentioned mobile electronic device and non-mobile electronic device.

Fig. 11 shows a schematic hardware structural diagram of an electronic device provided by some embodiments of the present disclosure.

The electronic device 800 includes, but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, and other components.

It may be understood by those skilled in the art that the electronic device 1100 may further include a power source (such as a battery) for supplying power to various components, and the power source may be logically connected to the processor 1110 through a power management system, so as to implement functions such as charging management, discharging management, and power consumption management through the power management system. The structure of the electronic device shown in Fig. 11 does not constitute a limitation on the electronic device, and the electronic device may include more or fewer components than those shown in the figure, or combine some components, or have different component arrangements, which will not be repeated here.

The display unit 1106 displays a comment display interface, where the comment display interface includes at least one item of first comment information;
the user input unit 1107 receives a first trigger operation on the comment display interface; and
the display unit 1106 is configured to, in response to the first trigger operation, display a comment summary interface, where the comment summary interface includes a target component, the target component includes at least one item of opinion information corresponding to at least one item of comment information, the at least one item of opinion information being semantically associated with at least one group of second comment information, the at least one group of second comment information is included in the at least one item of first comment information, and the at least one group of second comment information includes at least one item of comment information.

In the embodiment of the present disclosure, in a case where at least one item of first comment information is displayed in the comment display interface, in response to the first trigger operation of the user on the comment display interface, the comment summary interface may be triggered to be displayed, and the opinion information generated based on the first comment information may be displayed in the target component in the comment summary interface. The user may quickly and conveniently understand a summary of opinion content included in the first comment information by viewing the opinion information, thereby improving the convenience for the user to understand the opinion content in the first comment information.

Further, the display unit 1106 is configured to display at least one first control in the target component, where the at least one first control corresponds to the at least one item of opinion information;
the user input unit 1107 is configured to receive a second trigger operation on a target first control, where the target first control corresponds to target opinion information; and
the display unit 1106 is configured to, in response to the second trigger operation, display a target interface, where a group of second comment information is displayed in the target interface, and the group of second comment information corresponds to the target opinion information.

In the embodiment of the present disclosure, the first control corresponding to the opinion information is displayed in the target component in the comment summary interface, and the user may perform the second trigger operation on the first control to trigger the display of the target interface of corresponding second comment information, so that the user may browse a group of second comment information corresponding to the opinion information in the target interface, which is convenient for the user to browse and view the second comment information corresponding to different items of opinion information separately.

Further, the display unit 1106 is configured to display first prompt information in the first control, where the first prompt information is configured to prompt a comment number of the group of second comment information, and/or a quantitative relationship between the group of second comment information and the comment information.

In the embodiment of the present disclosure, the first prompt information is displayed in the first control, so that the user may know the number of the group of second comment information corresponding to the first control and/or the quantitative relationship between the group of second comment information and the first comment information, thereby facilitating the user to know the quantity data of the second comment information corresponding to each item of opinion information in time.

Further, the display unit 1106 is configured to display at least two category labels in the target interface and/or the comment summary interface; and
the display unit 1106 is configured to, in response to a trigger operation on a target category label, display at least one of: first comment information corresponding to a target category, second comment information corresponding to the target category, and opinion information corresponding to the target category.

In the embodiment of the present disclosure, at least two category labels are displayed in the target interface and/or the comment summary interface, the trigger operation on the target category label in the at least two category labels is received, and the first comment information, the second comment information, or the opinion information corresponding to the target category is displayed in response to the trigger operation. The category labels correspond to different comment categories or content classifications, and by triggering the target category label, the first comment information, the second comment information, or the opinion information corresponding to the target category label may be filtered and displayed. In this way, the user may conveniently switch to display the information corresponding to the target category that needs to be viewed in the target interface, without the need for the user to frequently switch display interfaces, which simplifies the operation steps for the user to switch the information that needs to be viewed.

Further, the display unit 1106 is configured to display a second control in the comment display interface, where the second control includes second prompt information, and the second prompt information is configured to prompt a number of opinion components in the comment summary interface; and
the user input unit 1107 is configured to receive the first trigger operation on the second control.

In the embodiment of the present disclosure, the second prompt information for prompting the number of opinion components is displayed in the second control, so that the user may know in time the number of opinion components and the number of items of opinion information displayed in the comment summary interface when viewing the comment display interface, which plays a prompting role for the user to view the comment summary interface.

Further, the display unit 1106 is configured to display at least partial information of at least one item of second comment information in the target component.

In the embodiment of the present disclosure, the second comment information is displayed in the target component, so that the user may view the opinion information and the corresponding comment information in the comment summary interface, and only part of information in the second comment information may be displayed, to reduce a display area occupied by the second comment information in the target component, so that the target component may display more content.

Further, the display unit 1106 is configured to display at least part of the second comment information in the target component in the folding way, and display a fourth control;
the user input unit 1107 is configured to receive a third trigger operation on the fourth control;
the display unit 1106 is configured to, in response to the third trigger operation, unfold the at least part of the second comment information, and display a fifth control;
the user input unit 1107 is configured to receive a fourth trigger operation on the fifth control; and
the display unit 1106 is configured to, in response to the fourth trigger operation, display at least part of the second comment information in the folding way, and display the fourth control.

In the embodiment of the present disclosure, at least part of the second comment information may be folded and displayed in the target component, and the fourth control for unfolding the second comment information is displayed. The user may unfold the second comment information that is folded and displayed by triggering the fourth control. After the second comment information that is folded is unfolded and displayed, the fifth control is also displayed in the target component, and the user may display the second comment information by triggering the fifth control in the folding way. In this way, the user may control whether the second comment information is folded and displayed through the fourth control and the fifth control, thereby improving the convenience for the user to view the second comment information in the comment summary interface.

Further, in a case where a text number of the second comment information in the target component is greater than a number threshold, a number of items of the second comment information in the target component is N, where N is a positive integer; and
in a case where the text number of the second comment information in the target component is less than or equal to the number threshold, the number of items of the second comment information in the target component is M, where M is a positive integer, and N < M.

In the embodiment of the present disclosure, the number of items of second comment information displayed in the target component is selected based on the relationship between the text number of the second comment information in the target component and the number threshold, thereby realizing an adaptive adjustment of the number of items of second comment information in the target component according to the text number in the second comment information.

Further, the opinion information includes opinion summary information and/or opinion detail information.

In the embodiment of the present disclosure, the opinion information includes the opinion summary information and/or the opinion detail information. By viewing the opinion summary information, the user may know the relevant summary of all the opinion information extracted from the first comment information, and by viewing the opinion detail information of each opinion, the user may fully understand the detailed content of each extracted opinion.

Further, a number of the target components is at least two, and an arrangement order of the at least two target components is associated with a number of items of second comment information corresponding to the target components.

In the embodiment of the present disclosure, in a case where there are a plurality of target components in the comment summary interface, the display order of the plurality of target components is sorted based on the number of items of second comment information corresponding to the opinion information in the plurality of target components, so that the user may clearly know the number of items of second comment information associated with different items of opinion information.

Further, the display unit 1106 is configured to, in a case where a content update amount of the target component in the comment summary interface is greater than an update amount threshold, display a first identifier in the comment display interface.

In the embodiment of the present disclosure, with an increase in the first comment information, the opinion information may be updated based on new first comment information. At least one item of opinion information is displayed in the target component, and in a case where the opinion information is updated, the content update amount of the display content displayed in the target component is determined. When the content update amount is greater than the update amount threshold, the first identifier is displayed in the comment display interface, and the user is prompted by the first identifier that the comment summary interface includes a large amount of updated content, which plays a role of prompting the user to view the comment summary interface.

In some embodiments of the present disclosure, the display unit 1106 is configured to display a sixth control in the comment summary interface;
the user input unit 1107 is configured to receive a fifth trigger operation on the sixth control; and
the processor 1110 is configured to generate and output feedback information of the opinion information in response to the fifth trigger operation.

In the embodiment of the present disclosure, the sixth control is displayed in the comment summary interface, so that the user may perform evaluation feedback on the opinion information in the comment summary interface, which is convenient for subsequent optimization of the comment summary interface and optimization of the target processing for extracting the opinion information.

Further, the display unit 1106 is configured to display third prompt information in the comment summary interface, where the third prompt information is configured to prompt the user of a generation manner of the opinion information.

In the embodiment of the present disclosure, the third prompt information is displayed in the comment summary interface to prompt the user of the generation manner of the opinion information in the comment summary interface, thereby improving the user experience on the comment summary interface.

Further, the opinion information is generated based on target processing on the at least one item of first comment information, and the target processing includes at least one of: text model-based summarization, subgraph-based keyword extraction, graph coreference processing, and semantic coreference processing.

In the embodiment of the present disclosure, the opinion information associated with the at least one item of first comment information may be generated by performing the target processing on the at least one item of first comment information displayed in the display interface. The target processing performed on the at least one item of first comment information includes at least one of: text model-based summarization, subgraph-based keyword extraction, graph coreference processing, and semantic coreference processing.

It should be understood that in the embodiment of the present disclosure, the input unit 1104 may include a graphics processing unit (GPU) 11041 and a microphone 11042, and the graphics processing unit 11041 processes image data of a still picture or a video obtained by an image capturing apparatus (such as a camera) in a video capturing mode or an image capturing mode. The display unit 1106 may include a display panel 11061, and the display panel 11061 may be configured in the form of a liquid crystal display, an organic light emitting diode, or the like. The user input unit 1107 includes at least one of a touch panel 11071 and other input devices 11072. The touch panel 11071 is also referred to as a touch screen. The touch panel 11071 may include two parts: a touch detection apparatus and a touch controller. The other input devices 11072 may include, but are not limited to, a physical keyboard, a function button (such as a volume control button, a switch button, etc.), a trackball, a mouse, and a joystick, which will not be repeated here.

The memory 1109 may be used to store software programs and various data. The memory 1109 may mainly include a first storage area for storing programs or instructions and a second storage area for storing data, where the first storage area may store an operating system, applications or instructions required for at least one function (such as a sound playback function, an image playback function, etc.), etc. In addition, the memory 1109 may include a volatile memory or a non-volatile memory, or the memory 1109 may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synch link dynamic random access memory (SLDRAM), and a direct rambus random access memory (DRRAM). The memory 1109 in the embodiment of the present disclosure includes, but is not limited to, these and any other suitable types of memories.

The processor 1110 may include one or more processing units. Optionally, the processor 1110 integrates an application processor and a modulation and demodulation processor, where the application processor mainly processes operations involving an operating system, a user interface, applications, etc., and the modulation and demodulation processor mainly processes wireless communication signals, such as a baseband processor. It may be understood that the above-mentioned modulation and demodulation processor may not be integrated into the processor 1110.

An embodiment of the present disclosure further provides a readable storage medium, where a program or instructions are stored on the readable storage medium, and the program or instructions, when executed by a processor, implement various processes of the above interface display method embodiment, and may achieve the same technical effects. To avoid redundancy, details are not repeated herein.

The processor is the processor in the electronic device in the above embodiment. The readable storage medium includes a computer-readable storage medium, such as a computer read-only memory ROM, a random access memory RAM, a magnetic disk, or an optical disc, etc.

An embodiment of the present disclosure further provides a chip, which includes a processor and a communication interface, where the communication interface is coupled with the processor, and the processor is configured to run a program or instructions to implement various processes of the above interface display method embodiment, and may achieve the same technical effects. To avoid redundancy, details are not repeated herein.

It should be understood that the chip mentioned in the embodiments of the present disclosure may also be referred to as a system-on-chip, a system-on-chip, a system-on-chip, or a system-on-chip, etc.

An embodiment of the present disclosure provides a computer program product, which is stored in a storage medium, where the program product is executed by at least one processor to implement various processes of the above interface display method embodiment, and may achieve the same technical effects. To avoid redundancy, details are not repeated herein.

It should be noted that in this paper, the terms "include", "include" or any other variation thereof are intended to cover non-exclusive inclusion, so that a process, method, object or apparatus including a series of elements includes not only those elements, but also other elements not explicitly listed or elements inherent to such process, method, object or apparatus. Without further restrictions, an element defined by the phrase "includes a" does not exclude the presence of additional identical elements in the process, method, object or apparatus that includes the element. In addition, it should be pointed out that the scope of the method and apparatus in the implementations of the present disclosure is not limited to performing functions in the order shown or discussed, and may include performing functions in a substantially simultaneous manner or in the reverse order according to the functions involved, for example, the described method may be performed in an order different from that described, and various steps may be added, omitted, or combined. In addition, features described with reference to certain examples may be combined in other examples.

Through the description of the above implementations, those skilled in the art may clearly understand that the method of the above embodiment may be implemented by means of software plus a necessary general hardware platform, and certainly may also be implemented by hardware, but in many cases the former is a better implementation. Based on this understanding, the technical solution of the present disclosure may be embodied in the form of a computer software product in essence or in a part that contributes to the prior art. The computer software product is stored in a storage medium (such as a ROM/RAM, a magnetic disk, an optical disc), and includes several instructions for enabling a terminal (which may be a mobile phone, a computer, a server, or a network device, etc.) to execute the method of each embodiment of the present disclosure.

The embodiments of the present disclosure have been described above with reference to the drawings, but the present disclosure is not limited to the above specific implementations. The above specific implementations are only illustrative and not restrictive. Those of ordinary skills in the art may make many forms under the enlightenment of the present disclosure without departing from the spirit of the present disclosure and the scope of protection of the claims, all of which belong to the protection of the present disclosure.

## Claims

1. An interface display method, comprising:
displaying a comment display interface, wherein the comment display interface comprises at least one item of first comment information;
receiving a first trigger operation on the comment display interface; and
displaying a comment summary interface in response to the first trigger operation, wherein the comment summary interface comprises a target component, the target component comprises at least one item of opinion information corresponding to the at least one item of comment information, the at least one item of opinion information being semantically associated with at least one group of second comment information, the at least one group of second comment information is comprised in the at least one item of first comment information, and the at least one group of second comment information comprises at least one item of comment information.

2. The interface display method of claim 1, further comprising:
displaying at least one first control in the target component, wherein the at least one first control corresponds to the at least one item of opinion information;
receiving a second trigger operation on a target first control, wherein the target first control corresponds to target opinion information; and
displaying a target interface in response to the second trigger operation, wherein a group of second comment information is displayed in the target interface, and the group of second comment information corresponds to the target opinion information.

3. The interface display method of claim 2, further comprising:
displaying first prompt information in the first control, wherein the first prompt information is configured to prompt a comment number of the group of second comment information, and/or to prompt a quantitative relationship between the group of second comment information and the comment information.

4. The interface display method of claim 2, further comprising:
displaying at least two category labels in the target interface and/or the comment summary interface; and
in response to a trigger operation on a target category label, displaying at least one selected from a group consisting of: the first comment information corresponding to a target category, the second comment information corresponding to the target category, and opinion information corresponding to the target category.

5. The interface display method of claim 1, wherein receiving the first trigger operation on the comment display interface comprises:
displaying a second control in the comment display interface, wherein the second control comprises second prompt information, and the second prompt information is configured to prompt a number of opinion components in the comment summary interface; and
receiving the first trigger operation on the second control.

6. The interface display method of claim 1, further comprising:
displaying at least partial information of at least one item of second comment information in the target component.

7. The interface display method of claim 6, further comprising:
displaying at least part of the second comment information in the target component in a folding way, and displaying a fourth control;
receiving a third trigger operation on the fourth control;
in response to the third trigger operation, unfolding at least part of the second comment information, and displaying a fifth control;
receiving a fourth trigger operation on the fifth control; and
in response to the fourth trigger operation, displaying at least part of the second comment information in the folding way, and displaying the fourth control.

8. The interface display method of claim 1, wherein in a case where a text number of the second comment information in the target component is greater than a number threshold, a number of items of the second comment information in the target component is N, wherein N is a positive integer; and
in a case where the text number of the second comment information in the target component is less than or equal to the number threshold, the number of items of the second comment information in the target component is M, wherein M is a positive integer, and N < M.

9. The interface display method of claim 1, wherein the opinion information comprises opinion summary information and/or opinion detail information.

10. The interface display method of any of claims 1 to 9, wherein a number of target components is at least two, and an arrangement order of at least two target components is associated with a number of items of the second comment information corresponding to the target components.

11. The interface display method of any of claims 1 to 9, further comprising:
in a case where a content update amount of the target component in the comment summary interface is greater than an update amount threshold, displaying a first identifier in the comment display interface.

12. The interface display method of any of claims 1 to 9, further comprising:
displaying a sixth control in the comment summary interface;
receiving a fifth trigger operation on the sixth control; and
generating and outputting feedback information of the opinion information in response to the fifth trigger operation.

13. The interface display method of any of claims 1 to 9, further comprising:
displaying third prompt information in the comment summary interface, wherein the third prompt information is configured to prompt a user of a generation manner of the opinion information.

14. The interface display method of any of claims 1 to 9, wherein the opinion information is generated based on target processing on the at least one item of first comment information, and the target processing comprises at least one selected from a group consisting of: text model-based summarization, subgraph-based keyword extraction, graph coreference processing, and semantic coreference processing.

15. An interface display apparatus, comprising:
a displaying module, configured to display a comment display interface, wherein the comment display interface comprises at least one item of first comment information; and
a receiving module, configured to receive a first trigger operation on the comment display interface,
wherein the displaying module is further configured to display a comment summary interface in response to the first trigger operation, wherein the comment summary interface comprises a target component, the target component comprises at least one item of opinion information corresponding to the at least one item of comment information, the at least one item of opinion information being semantically associated with at least one group of second comment information, the at least one group of second comment information is comprised in the at least one item of first comment information, and the at least one group of second comment information comprises at least one item of comment information.

16. An electronic device, comprising:
a processor and a memory, wherein a program or instructions which are executable by the processor are stored on the memory, and the program or instructions, when executed by the processor, implement the method of any of claims 1 to 14.

17. A readable storage medium, wherein a program or instructions are stored on the readable storage medium, and the program or instructions, when executed by a processor, implement the method of any of claims 1 to 14.
